(19)

**Europäisches Patentamt**
**European Patent Office**
**Office européen des brevets**

(11) **EP 3 647 488 B1**

(12) **EUROPEAN PATENT SPECIFICATION**

(45) Date of publication and mention of the grant of the patent:
**06.11.2024 Bulletin 2024/45**

(21) Application number: **18824547.6**

(22) Date of filing: **28.06.2018**

(51) International Patent Classification (IPC):
**D07B 1/06** *(2006.01)*       **B65G 15/30** *(2006.01)*
**C25D 7/06** *(2006.01)*

(52) Cooperative Patent Classification (CPC):
(C-Sets available)
**D07B 1/0613; B65G 15/30; C25D 7/06;**
**D07B 1/0666;** D07B 1/062; D07B 1/0633;
D07B 2201/104; D07B 2201/2011;
D07B 2201/2013; D07B 2201/2043;
D07B 2201/2061; D07B 2201/2066;
D07B 2205/3057; D07B 2205/3071;
D07B 2205/3089;                                    (Cont.)

(86) International application number:
**PCT/JP2018/024701**

(87) International publication number:
**WO 2019/004392 (03.01.2019 Gazette 2019/01)**

(54) **STEEL CORD FOR RUBBER COMPONENT REINFORCEMENT AND PRODUCTION METHOD THEREFOR**

STAHLSEIL ZUR VERSTÄRKUNG VON GUMMIKOMPONENTEN UND HERSTELLUNGSVERFAHREN DAFÜR

CÂBLE EN ACIER DESTINÉ À RENFORCER UN ÉLÉMENT EN CAOUTCHOUC ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017   JP 2017129980**

(43) Date of publication of application:
**06.05.2020   Bulletin 2020/19**

(73) Proprietor: **Bridgestone Corporation**
**Tokyo 104-8340 (JP)**

(72) Inventors:
• **OBANA Naohiko**
  **Tokyo 104-8340 (JP)**
• **OONO Yoshiaki**
  **Tokyo 104-8340 (JP)**

(74) Representative: **Marks & Clerk LLP**
**15 Fetter Lane**
**London EC4A 1BW (GB)**

(56) References cited:
**EP-A1- 0 061 986        EP-A1- 0 065 477**
**EP-A1- 2 162 299        WO-A1-2012/021134**
**JP-A- 2003 532 808      JP-A- 2007 107 136**
**JP-A- 2007 107 136      JP-A- S 544 250**
**JP-A- S5 686 639**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
D07B 2401/2025; D07B 2401/204;
D07B 2501/2046; D07B 2501/2076; F16G 1/12;
F16G 5/10

C-Sets
D07B 2201/2061, D07B 2801/24;
D07B 2201/2066, D07B 2801/12;
D07B 2205/3057, D07B 2801/10;
D07B 2205/3071, D07B 2801/18, D07B 2801/22;
D07B 2205/3089, D07B 2801/18

**Description**

TECHNICAL FIELD

The present invention relates to a rubber article-reinforcing steel cord (hereinafter, also simply referred to as "steel cord") and a method of producing the same. More particularly, the present invention relates to a rubber article-reinforcing steel cord having excellent corrosion resistance, and a method of producing the same with excellent productivity.

BACKGROUND ART

Steel cords for conveyor belts are usually plated with zinc such that rainwater and the like do not reach steel filaments (hereinafter, also simply referred to as "filaments") through a cut damage. This allows the plated zinc to corrode preferentially to the filaments, and corrosion of the filaments can thereby be delayed. A variety of proposals have been made on such zinc-plated steel cords.

For example, Patent Document 1 proposes a steel cord having a multi-twisted structure in which outermost layer filaments of outermost layer strands constituting the outer circumference of the steel cord are plated with brass, and at least one filament positioned on the inner side than the outermost layer strands is plated with zinc. Further, Patent Document 2 proposes to perform plating with a metal having a higher ionization tendency than iron on at least one filament other than outermost layer filaments of outermost layer strands constituting a steel cord having a multi-twisted structure and to control the amount of the plated metal to be 0.0015 to 0.45 mol per 1 kg of all filaments. Moreover, Patent Document 3 proposes an electrode wire for wire electric discharge machining, which includes a copper wire that has a wire diameter of 0.02 to 0.20 mm as a core material and a plating layer that has a bilayer structure composed of a brass plating lower layer and a zinc plating upper layer on the surface of the core wire, the electrode wire having a prescribed tensile strength Ts. Attention is also drawn to the disclosures of ISO 17832:2009 and JPS56-86639A.

RELATED ART DOCUMENTS

PATENT DOCUMENTS

[Patent Document 1] JP 2011-202291 A
[Patent Document 2] JP 2015-196937 A
[Patent Document 3] JP 2003-311544 A

SUMMARY OF THE INVENTION

PROBLEMS TO BE SOLVED BY THE INVENTION

However, in the steel cords proposed in Patent Documents 1 and 2, a production method thereof is not examined although the adhesion with rubber and the corrosion resistance are examined. In addition, in Patent Document 3, the use for rubber article reinforcement is not examined. Therefore, at present, there is room for further investigation with regard to producing a rubber article-reinforcing steel cord having excellent corrosion resistance with good productivity.

In view of the above, an object of the present invention is to provide a rubber article-reinforcing steel cord having excellent corrosion resistance, and a method of producing the same with excellent productivity.

MEANS FOR SOLVING THE PROBLEMS

The present inventors intensively studied to solve the above-described problems and obtained the following finding as a result. That is, it was found that, when a zinc-plated steel wire material is drawn, for example, detachment of the plated zinc and abrasion of a die occur, and the productivity is thereby deteriorated. Based on this finding, the present inventors further intensively studied to discover that the above-described problems can be solved by adopting the following structure and production steps for the steel cord to be obtained, thereby completing the present invention.

That is, the rubber article-reinforcing steel cord according to the present invention is a rubber article-reinforcing steel cord as claimed in claim 1.

In the steel cord of the present invention, it is preferred that the cord comprises zinc plating on the outer circumference of the brass plating of all of the outermost-layer steel filaments of the core strand and the sheath strands.

Further, in the steel cord of the present invention, it is preferred that, when a diameter of the steel filaments is defined as d, an amount ($g/m^2$) of the brass plating adhered to the steel filaments be 6d to 10d, and an amount ($g/m^2$) of the zinc plating adhered to the steel filaments be 25d to 95d. Still further, in the steel cord of the present invention, it is preferred that the steel filaments have a tensile strength Ts (MPa) satisfying a relationship represented by the following formula:

$$(-2{,}000 \times d + 3{,}825) \le Ts < (-2{,}000 \times d + 4{,}525).$$

The steel cord of the present invention can be suitably used for reinforcing a conveyor.

A method of producing a rubber article-reinforcing steel cord according to the present invention is provided as claimed in claim 6.

In the method of producing a rubber article-reinforcing steel cord according to the present invention, it is preferred that the zinc plating step be performed by electroplating.

EFFECTS OF THE INVENTION

According to the present invention, a rubber article-reinforcing steel cord having excellent corrosion resistance, and a method of producing the same with excellent productivity can be provided.

BRIEF DESCRIPTION OF THE DRAWINGS

[FIG. 1] FIG. 1 is a cross-sectional view illustrating a rubber article-reinforcing steel cord according to one preferred embodiment of the present invention.

[FIG. 2] FIG. 2 is a cross-sectional view illustrating a rubber article-reinforcing steel cord according to another preferred embodiment of the present invention.

[FIG. 3] FIG. 3 is a cross-sectional view illustrating a rubber article-reinforcing steel cord according to yet another preferred embodiment of the present invention.

[FIG. 4] FIG. 4 is a cross-sectional view illustrating a rubber article-reinforcing steel cord according to yet another preferred embodiment of the present invention.

[FIG. 5] FIG. 5 is a cross-sectional view illustrating a rubber article-reinforcing steel cord according to yet another preferred embodiment of the present invention.

MODE FOR CARRYING OUT THE INVENTION

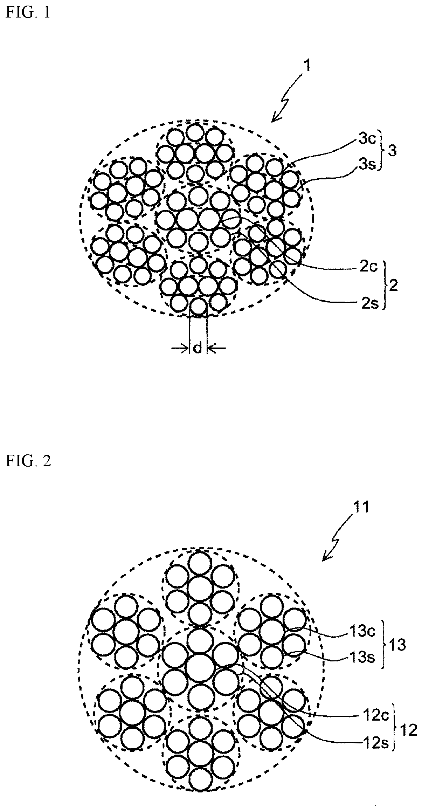

The rubber article-reinforcing steel cord of the present invention will now be described in detail referring to the drawings. FIG. 1 is a cross-sectional view illustrating a rubber article-reinforcing steel cord according to one preferred embodiment of the present invention. A steel cord 1 of the present invention has a multi-twisted structure in which plural sheath strands 3 each formed by twisting together plural steel filaments are twisted together around at least one core strand 2 formed by twisting together plural steel filaments. The illustrated steel cord 1 has a (2+8)+6×(2+8) structure in which six sheath strands 3 are twisted together around a single core strand 2, and the core strand 2 and the sheath strands 3 are each composed of a core in which two core filaments 2c or 3c are parallelly aligned without being twisted together, and eight sheath filaments 2s or 3s that are twisted together around the core.

In the steel cord 1 of the present invention, brass plating is performed on the steel filaments, and zinc plating is further performed at least on the outer circumference of the brass plating of the outermost-layer sheath filaments 3s of the sheath strands 3. In this steel cord, the zinc plating performed on the outermost-layer sheath filaments 3s of the sheath strands 3 corrodes preferentially to the filaments and, therefore, corrosion of the filaments can be delayed. In addition, the zinc plating does not hinder the adhesion with a rubber. Further, as described below, the steel cord 1 having such a structure has excellent productivity.

In the steel cord 1 of the present invention, it is preferred that zinc plating be performed on the outer circumference of the brass plating of all of the outermost-layer steel filaments of the core strand 2 and the sheath strands 3. By performing zinc plating on all of the outermost-layer sheath filaments 2s and 3s of all strands in this manner, the above-described effects can be more favorably attained. In the steel cord 1 of the present invention, zinc plating may be performed on all of the steel filaments constituting the steel cord 1.

In the steel cord 1 which is excluded from the scope of the present invention for which protection is claimed, a zinc electroplating treatment is performed for the zinc plating of the steel filaments, it is more advantageous in terms of the overall processing speed, the productivity and the cost to perform a zinc electroplating treatment separately on individual steel filaments than to perform the zinc electroplating treatment as claimed after twisting together the steel filaments and thereby forming the steel cord. Moreover, for example, in terms of the adhesion with rubber, it is more preferred to perform a zinc plating treatment on the steel filaments one by one, which is excluded from the scope of the present invention for which protection is claimed, than to perform the zinc electroplating treatment as claimed after the formation of the steel cord, since this leads to a greater amount of adhered zinc plating.

In the steel cord 1 of the present invention, the gauge of the brass plating is smaller than that of the zinc plating. In order to favorably obtain the effects of the present invention, it is necessary to ensure a certain level of the zinc plating gauge. In addition, in the below-described method of producing the steel cord 1 of the present invention, since it is required to perform a drawing process on a steel wire material obtained after the brass plating, the brass plating gauge is usually smaller than the zinc plating gauge.

Specifically, when a diameter of the steel filaments is defined as d, it is preferred that an amount ($g/m^2$) of the brass plating adhered to the steel filaments be 6d to 10d, and an amount ($g/m^2$) of the zinc plating adhered to the steel filaments be 25d to 95d. When the amount of the adhered brass plating is less than 6d, the drawability is deteriorated, which is not preferred. Meanwhile, when this amount is greater than 10d, the productivity is reduced, which is disadvantageous and thus not preferred from the standpoint of economic efficiency. Further, when the amount of the adhered zinc plating is less than 25d, the corrosion resistance may be deteriorated, which is not preferred, while an amount of greater than 95d is also not preferred since the productivity is reduced, which is disadvantageous from the standpoint of economic efficiency.

In the steel cord 1 of the present invention, it is preferred that the filaments have a tensile strength Ts (MPa) satisfying a relationship represented by the following formula:

$$(-2,000 \times d + 3,825) \leq Ts < (-2,000 \times d + 4,525).$$

By controlling the Ts to be ($-2,000 \times d + 3,825$) or higher, a weight reduction effect is obtained since a tensile strength can be ensured even when the filaments have a small wire diameter, and the resistance to repeated bending fatigue is improved since such a tensile strength Ts allows the use of fine filaments. On the other hand, a tensile strength Ts of ($-2,000 \times d + 4,525$) or higher may impair the drawability in brass plating as well and thus present a problem in terms of the productivity.

In the steel cord 1 of the present invention, as long as the above-described constitutions are satisfied, other constitutions are not particularly restricted. For example, plural core strands may be used, and two core strands may be parallelly arranged with or without being twisted together. The number of the sheath strands may be 6 to 10. Moreover, in the steel cord 1 of the present invention, the structures of the core strand 2 and the sheath strands 3 are also not particularly restricted, and these strands may have a single-twist structure or a layer-twisted structure, preferably a (2+m) structure or a (2+m+n) structure, wherein m is 5 to 10 and n is 10 to 15. Such a structure does not deteriorate the productivity of the steel cord 1 and can provide a sufficient strength. FIGs. 2 to 5 are cross-sectional views each illustrating a rubber article-reinforcing steel cord according to other preferred embodiment of the present invention.

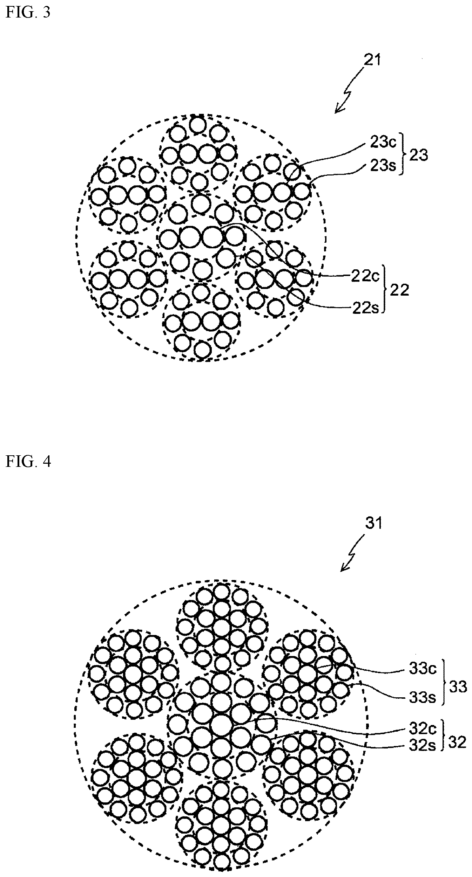

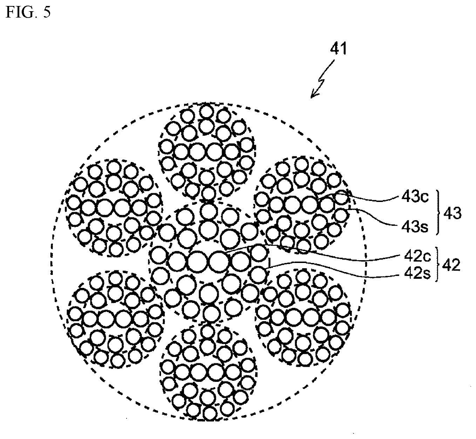

A steel cord 11 illustrated in FIG. 2 has a structure in which six sheath strands 13 are wound on a single core strand 12, and the core strand 12 and the sheath strands 13 are each formed by twisting together six sheath filaments 12s or 13s around a single core filament 12c or 13c. A steel cord 21 illustrated in FIG. 3 has a structure in which six sheath strands 23 are wound on a single core strand 22, and the core strand 22 and the sheath strands 23 are each formed by twisting together eight sheath filaments 22s or 23s around a core in which two core filaments 22c or 23c are twisted together. A steel cord 31 illustrated in FIG. 4 has a structure in which six sheath strands 33 are wound on a single core strand 32, and the core strand 32 and the sheath strands 33 are each formed by twisting together six sheath filaments 32s or 33s around a single core filament 32c or 33c, and further twisting together twelve sheath filaments 32s or 33s thereon. A steel cord 41 illustrated in FIG. 5 has a structure in which six sheath strands 43 are wound on a single core strand 42, and the core strand 42 and the sheath strands 43 are each formed by twisting together eight sheath filaments 42s or 43s around a core in which two core filaments 42c or 43c are twisted together, and further twisting together fourteen sheath filaments 42s or 43s thereon.

In the steel cord of the present invention, the core filaments and the sheath filaments that constitute the respective strands may have the same diameter or different diameters, and the twist pitch and the twist direction of the core filaments and the sheath filaments that constitute the respective strands can be selected as appropriate in accordance with a conventional method. Further, the twist direction, the twist pitch and the like of the strands are also not particularly restricted and can be selected as appropriate in accordance with a conventional method.

As the filaments used in the steel cord 1 of the present invention, any conventionally used filaments can be selected; however, the filaments are preferably made of a high-carbon steel containing not less than 0.80% by mass of a carbon component. By using a high-hardness and high-carbon steel containing not less than 0.80% by mass of a carbon component as the material of the filaments, an effect of reinforcing a rubber article, such as a tire or a belt, can be sufficiently obtained. Meanwhile, a carbon component content of higher than 1.5% is not preferred since it reduces the ductility and the fatigue resistance is thereby deteriorated.

In the steel cord 1 of the present invention, the filaments preferably have a diameter (d) in a range of 0.3 to 0.80 mm. As long as the diameter (d) of the filaments is in this range, the productivity of the steel cord 1 is not deteriorated.

The use of the steel cord 1 of the present invention is not particularly restricted, and the steel cord 1 of the present invention can be widely used in a variety of rubber products and components, for example, automobile tires and industrial belts such as dynamic transmission belts and conveyor belts, as well as rubber crawlers, hoses, and seismic isolation rubber bearings. Thereamong, the steel cord 1 of the present invention can be particularly suitably used as a reinforcing material of a conveyor belt.

Next, a method of producing a steel cord according to the present invention will be described. The method of producing a steel cord according to the present invention (hereinafter, also referred to as "production method") includes: a brass plating step of plating a steel wire material with brass; a drawing step of drawing the resulting steel wire material; a steel filament twisting step of twisting together the thus obtained steel filaments to form strands; and a strand twisting step of twisting together the thus obtained strands. One embodiment of the production method of the present invention includes a zinc plating step of performing zinc plating after the strand twisting step. Another example, which is excluded from the scope of the present invention for which protection is claimed, of the method of producing a steel cord according to the present invention includes the zinc plating step of performing zinc plating after the drawing step. A drawing process may be further added before the brass plating step.

In the steel cord 1 of the present invention, zinc plating is further performed at least on the outer circumference of the brass plating of the outermost-layer sheath steel filaments of the sheath strands 3. Accordingly, as a production method thereof, which is excluded from the scope of the present invention for which protection is claimed, it is considered. performing brass plating and zinc plating on a steel wire material, subsequently drawing the thus plated steel wire material to obtain filaments, and then twisting together the filaments. However, as compared to drawing of a brass-plated filament, drawing of a zinc-plated steel wire material has problems in that it leads to a large amount of plating detachment and major abrasion of a die. In order to solve these problems, it is necessary to lower the drawing rate; however, this deteriorates the productivity.

Therefore, in the production method which is excluded from the scope of the present invention for which protection is claimed, filaments are prepared by drawing a brass-plated steel wire material, and zinc plating is subsequently performed on the filaments. By performing zinc plating after the drawing step in this manner, a reduction in the drawing rate of the steel wire material is inhibited, whereby problems such as detachment of plating and abrasion of a die can be avoided. Particularly, by incorporating the zinc plating step of performing zinc plating as claimed after the strand twisting step, plural filaments can be simultaneously plated with zinc; therefore, the steel cord 1 of the present invention can be produced with good productivity.

Moreover, in the production method of the present invention, the zinc plating step is preferably performed by electroplating. In molten zinc plating that is common zinc plating, since a plating treatment is performed by immersing filaments in molten zinc at 450°C or higher, the strength of the filaments is greatly reduced when the filaments have a strength of 2,500 MPa or higher. Therefore, in the production method of the present invention, this problem can be avoided by performing the zinc plating step by electroplating.

In the production method of the present invention, means for performing brass plating on a steel wire material is not particularly restricted, and a brass-plated layer may be formed by sequentially plating copper and zinc and subsequently performing a thermal diffusion treatment, or by simultaneously plating copper and zinc.

In the production method of the present invention, what is important is only that a brass-plated steel wire material is drawn and zinc plating is subsequently performed, and other steps are not particularly restricted. For example, the steel wire material unwinding step, the steel wire material drawing step, the steel filament twisting step, the steel cord rolling-up step and the like can be performed in the same order as in a conventional method. For example, the drawing method used in the drawing step performed after the brass plating step may be dry drawing or wet drawing; however, when a brass-plated steel wire is used for a steel cord, since the filament diameter thereof after final drawing is 0.8 mm or less, it is preferred to employ wet drawing.

EXAMPLES

The present invention will now be described in more detail by way of Examples thereof.

<Examples 1 to 14 and Comparative Example 1>

Steel cords having the respective structures shown in Tables 1 to 5 were produced. As a steel wire material, one having a wire diameter of 2.62 mm that was obtained by drawing and patenting a piano wire rod having a diameter of 5.5 mm and a carbon content of 0.82% by mass was used. This steel wire material was brass-plated by performing thereon copper and zinc plating and then a thermal diffusion treatment, and the thus brass-plated steel wire material was drawn again to obtain filaments having various diameters. Thereafter, the filaments were twisted together to prepare strands, which were further twisted together to obtain each steel cord. It is noted here that the timing of plating was C to G as shown below, wherein B, C, F and G are excluded from the scope of the present invention for which protection is claimed,

The zinc plating was performed by electroplating.

<Conventional Example 1>

In Conventional Example 1, a steel cord was produced by the same procedures as in Example 1, except that the zinc plating was not performed.

<Conventional Example 2>

A steel cord was produced by the same procedures as in Conventional Example 1, except that zinc plating was performed in place of the brass plating.

<Timing of Plating>

> A: Drawing was performed after brass plating.
> B: Drawing was performed after zinc plating.
> C: Drawing was performed after zinc plating, and brass plating was performed after the formation of strands.
> D: Drawing was performed after brass plating, and zinc plating was performed after the formation of strands.
> E: Drawing was performed after brass plating, and zinc plating was performed after the formation of a steel cord.
> F: Drawing was performed after brass plating, and zinc plating was performed before the formation of strands.
> G: Zinc plating was performed after brass plating, followed by drawing and then twisting.

<Plating Structure>

> A: Only brass plating (not according to the claimed invention)
> B: Only zinc plating (not according to the claimed invention)
> C: Zinc plating on the inside, brass plating on the outside (not according to the claimed invention)
> D: Brass plating on the inside, zinc plating on the outside

For each of the thus obtained steel cords, the productivity, the corrosion resistance, the cord weight, and the resistance to repeated bending fatigue were evaluated. Each evaluation was indicated as an index, taking that of Conventional Example 1 as 100. The corrosion resistance and the resistance to repeated bending fatigue were tested by the below-described methods.

<Productivity>

With regard to the productivity, the weight of each cord produced per unit time was indicated as an index, taking that of the steel cord of Conventional Example 1 as 100. The results thereof are also shown in Tables 1 to 5.

<Corrosion Resistance Test>

The steel cords were each arranged in parallel to one another at intervals of 2.0 mm and subsequently coated with a rubber sheet from both above and below, and the resultant was vulcanized at 145°C for 40 minutes to prepare an evaluation sample. From the thus obtained sample, a steel cord cut at a length of 200 mm was taken out and then immersed in a neutral aqueous solution containing nitrate ions and sulfate ions in small amounts. A bending stress of 300 N/mm$^2$ was repeatedly applied to the steel cord at a rate of 1,000 rotations/minute, and the number of rotations required for breaking the steel cord was measured. The number of rotations was measured up to 1,000,000. The thus obtained results were converted into indices, taking the value measured for the steel cord of Conventional Example 1 as 100, and the corrosion-fatigue resistance was evaluated. The results thereof are also shown in Tables 1 to 5.

<Resistance to Repeated Bending Fatigue>

The steel cords were each arranged in parallel to one another at intervals of 2.0 mm and subsequently coated with a rubber sheet from both above and below, and the resultant was vulcanized at 145°C for 40 minutes. For a sample prepared by cutting out a bundle of three cords after the vulcanization, a fatigue test where the sample was passed through a pulley of 50 mm in diameter and driven vertically with a tension of 8.0% of the cord strength being applied was conducted, and the number of the repeated vertical movements required for breaking the sample was measured. The thus obtained results were indicated as indices, taking the value measured for the steel cord of Conventional Example 1 as 100. The results thereof are also shown in Tables 1 to 5.

<Cord Weight>

The weight per 1 m of each steel cord was measured and indicated as an index, taking that of the steel cord of Conventional Example 1 as 100. The results thereof are also shown in Tables 1 to 5.

[Table 1]

| | | | Conventional Example 1 | Conventional Example 2 | Comparative Example 1 | Example 1 |
|---|---|---|---|---|---|---|
| Timing of plating | | | A | B | C | D |
| Cord structure | | | (1+6) +6×(+6) | (1+6) +6×(+6) | (1+6) +6×(+6) | (1+6) +6×(+6) |
| Plating structure | | | A | B | C | D |
| Core strand | Core filament | Wire diameter (mm) | 0.66 | 0.66 | 0.66 | 0.67 |
| | | Tensile strength (MPa) | 2,550 | 2,550 | 2,550 | 2,536 |
| | Sheath filament | Wire diameter (mm) | 0.59 | 0.59 | 0.59 | 0.575 |
| | | Tensile strength (MPa) | 2,550 | 2,550 | 2,550 | 2,834 |
| Sheath strand | Core filament | Wire diameter (mm) | 0.59 | 0.59 | 0.59 | 0.575 |
| | | Tensile strength (MPa) | 2,550 | 2,550 | 2,550 | 2,834 |
| | Sheath filament | Wire diameter (mm) | 0.54 | 0.54 | 0.54 | 0.505 |
| | | Tensile strength (MPa) | 2,550 | 2,550 | 2,550 | 3,087 |
| Amount of brass plating (g/m$^2$) | | | 8d | 0 | 8d | 8d |
| Amount of zinc plating (g/m$^2$) | | | 0 | 65d | 65d | 65d |
| Productivity (index), higher is better | | | 100 | 50 | 40 | 97 |

(continued)

| | Conventional Example 1 | Conventional Example 2 | Comparative Example 1 | Example 1 |
|---|---|---|---|---|
| Corrosion resistance (index), higher is better | 100 | 120 | 102 | 120 |
| Cord weight (index), smaller is better | 100 | 100 | 100 | 90.4 |
| Resistance to repeated bending fatigue (index), higher is better | 100 | 90 | 95 | 148 |

[Table 2]

| | | | Example 2 | Example 3 | Example 4 | Example 5 |
|---|---|---|---|---|---|---|
| Timing of plating | | | D | D | D | D |
| Cord structure | | | (2+8) +6× (2+8) | (2+8) +6× (2+8) | (2+8) +6× (2+8) | (2+8) +6× (2+8) |
| Plating structure | | | D | D | D | D |
| Core strand | Core filament | Wire diameter (mm) | 0.505 | 0.505 | 0.505 | 0.505 |
| | | Tensile strength (MPa) | 3,087 | 3,087 | 3,087 | 3,087 |
| | Sheath filament | Wire diameter (mm) | 0.445 | 0.445 | 0.445 | 0.445 |
| | | Tensile strength (MPa) | 3,334 | 3,334 | 3,334 | 3,334 |
| Sheath strand | Core filament | Wire diameter (mm) | 0.445 | 0.445 | 0.445 | 0.445 |
| | | Tensile strength (MPa) | 3,334 | 3,334 | 3,334 | 3,334 |
| | Sheath filament | Wire diameter (mm) | 0.395 | 0.395 | 0.395 | 0.395 |
| | | Tensile strength (MPa) | 3,567 | 3,567 | 3,567 | 3,567 |
| Amount of brass plating (g/m$^2$) | | | 8d | 20d | 6d | 10d |
| Amount of zinc plating (g/m$^2$) | | | 65d | 25d | 35d | 95d |
| Productivity (index), higher is better | | | 97 | 94 | 102 | 96 |
| Corrosion resistance (index), higher is better | | | 120 | 105 | 108 | 122 |
| Cord weight (index), smaller is better | | | 77.5 | 77.5 | 77.5 | 77.5 |
| Resistance to repeated bending fatigue (index), higher is better | | | 153 | 151 | 152 | 154 |

[Table 3]

| | Example 6 | Example 7 | Example 8 |
|---|---|---|---|
| Timing of plating | E | F | G |
| Cord structure | (2+8)+6×(2+8) | (2+8)+6×(2+8) | (2+8)+6×(2+8) |

(continued)

| | | | Example 6 | Example 7 | Example 8 |
|---|---|---|---|---|---|
| Plating structure | | | D | D | D |
| Core strand | Core filament | Wire diameter (mm) | 0.505 | 0.505 | 0.505 |
| | | Tensile strength (MPa) | 3,087 | 3,087 | 3,087 |
| | Sheath filament | Wire diameter (mm) | 0.445 | 0.445 | 0.445 |
| | | Tensile strength (MPa) | 3,334 | 3,334 | 3,334 |
| Sheath strand | Core filament | Wire diameter (mm) | 0.445 | 0.445 | 0.445 |
| | | Tensile strength (MPa) | 3,334 | 3,334 | 3,334 |
| | Sheath filament | Wire diameter (mm) | 0.395 | 0.395 | 0.395 |
| | | Tensile strength (MPa) | 3,567 | 3,567 | 3,567 |
| Amount of brass plating (g/m$^2$) | | | 8d | 8d | 8d |
| Amount of zinc plating (g/m$^2$) | | | 65d | 65d | 65d |
| Productivity (index), higher is better | | | 98 | 85 | 70 |
| Corrosion resistance (index), higher is better | | | 118 | 130 | 105 |
| Cord weight (index), smaller is better | | | 77.5 | 77.5 | 77.5 |
| Resistance to repeated bending fatigue (index), higher is better | | | 150 | 150 | 115 |

[Table 4]

| | | | Example 9 | Example 10 | Example 11 |
|---|---|---|---|---|---|
| Timing of plating | | | D | D | D |
| Cord structure | | | (2+8)+6×(2+8) | (2+8)+6×(2+8) | (2+8)+6×(2+8) |
| Plating structure | | | D | D | D |
| Core strand | Core filament | Wire diameter (mm) | 0.52 | 0.475 | 0.52 |
| | | Tensile strength (MPa) | 2,785 | 3,575 | 2,790 |
| | Sheath filament | Wire diameter (mm) | 0.46 | 0.415 | 0.46 |
| | | Tensile strength (MPa) | 2,905 | 3,695 | 2,910 |
| Sheath strand | Core filament | Wire diameter (mm) | 0.46 | 0.415 | 0.46 |
| | | Tensile strength (MPa) | 2,905 | 3,695 | 2,910 |
| | Sheath filament | Wire diameter (mm) | 0.41 | 0.365 | 0.41 |
| | | Tensile strength (MPa) | 3,005 | 3,795 | 3,010 |
| Amount of brass plating (g/m$^2$) | | | 8d | 8d | 8d |
| Amount of zinc plating (g/m$^2$) | | | 65d | 65d | 65d |
| Productivity (index), higher is better | | | 98 | 96 | 98 |
| Corrosion resistance (index), higher is better | | | 120 | 120 | 120 |
| Cord weight (index), smaller is better | | | 83.2 | 66.7 | 83.2 |
| Resistance to repeated bending fatigue (index), higher is better | | | 143 | 163 | 144 |

[Table 5]

| | | | | Example 12 | Example 13 | Example 14 |
|---|---|---|---|---|---|---|
| | Timing of plating | | | D | D | D |
| | Cord structure | | | (2+8)+6×(2+8) | (2+8)+6×(2+8) | (2+8)+6×(2+8) |
| | Plating structure | | | D | D | D |
| Core strand | Core filament | Wire diameter (mm) | | 0.475 | 0.52 | 0.475 |
| | | Tensile strength (MPa) | | 3,570 | 2,780 | 3,580 |
| | Sheath filament | Wire diameter (mm) | | 0.415 | 0.46 | 0.415 |
| | | Tensile strength (MPa) | | 3,690 | 2,900 | 3,700 |
| Sheath strand | Core filament | Wire diameter (mm) | | 0.415 | 0.46 | 0.415 |
| | | Tensile strength (MPa) | | 3,690 | 2,900 | 3,700 |
| | Sheath filament | Wire diameter (mm) | | 0.365 | 0.41 | 0.365 |
| | | Tensile strength (MPa) | | 3,790 | 3,000 | 3,800 |
| Amount of brass plating (g/m$^2$) | | | | 8d | 8d | 8d |
| Amount of zinc plating (g/m$^2$) | | | | 65d | 65d | 65d |
| Productivity (index), higher is better | | | | 96 | 98 | 95 |
| Corrosion resistance (index), higher is better | | | | 120 | 120 | 120 |
| Cord weight (index), smaller is better | | | | 66.7 | 83.2 | 66.7 |
| Resistance to repeated bending fatigue (index), higher is better | | | | 162 | 140 | 160 |

From Tables 1 to 5, it is seen that the steel cords according to the present invention were produced with good productivity since the brass-plated steel wire material was drawn and then plated with zinc.

DESCRIPTION OF SYMBOLS

1, 11, 21, 31, 41: steel cord

2, 12, 22, 32, 42: core strand

2c, 12c, 22c, 32c, 42c: core filament

2s, 12s, 22s, 32s, 42s: sheath filament

3, 13, 23, 33, 43: sheath strand

3c, 13c, 23c, 33c, 43c: core filament

3s, 13s, 23s, 33s, 43s: sheath filament

Claims

1. A rubber article-reinforcing steel cord (1, 11, 21, 31, 41) in which plural sheath strands (3, 13, 23, 33, 43) each formed by twisting together plural steel filaments are twisted together around at least one core strand (2, 12, 22, 32, 42) formed by twisting together plural steel filaments,

    wherein the steel filaments are brass plated, **characterized in that**

either the respective sheath strands (3, 13, 23, 33, 43) are zinc plated on at least the outer circumference of the brass plating of outermost-layer steel filaments of the sheath strands (3, 13, 23, 33, 43), or the steel cord (1, 11, 21, 31, 41) is zinc plated on at least the outer circumference of the brass plating of outermost-layer steel filaments of the sheath strands (3, 13, 23, 33, 43), and a gauge of the brass plating is smaller than that of the zinc plating.

2. The rubber article-reinforcing steel cord (1, 11, 21, 31, 41) according to claim 1, wherein the cord comprises the zinc plating on the outer circumference of the brass plating of all of the outermost-layer steel filaments of the core strand (2, 12, 22, 32, 42) and the sheath strands (3, 13, 23, 33, 43).

3. The rubber article-reinforcing steel cord (1, 11, 21, 31, 41) according to claim 1 or 2, wherein, when a diameter of the steel filaments is defined as d, an amount (g/m$^2$) of the brass plating adhered to the steel filaments is 6d to 10d, and an amount (g/m$^2$) of the zinc plating adhered to the steel filaments is 25d to 95d.

4. The rubber article-reinforcing steel cord (1, 11, 21, 31, 41) according to any one of claims 1 to 3, wherein the steel filaments have a tensile strength Ts (MPa) satisfying a relationship represented by the following formula:

$$(-2,000 \times d + 3,825) \leq Ts < (-2,000 \times d + 4,525).$$

5. The rubber article-reinforcing steel cord (1, 11, 21, 31, 41) according to any one of claims 1 to 4, which is for a conveyer.

6. A method of producing a rubber article-reinforcing steel cord (1, 11, 21, 31, 41) in which plural sheath strands (3, 13, 23, 33, 43) each formed by twisting together plural steel filaments are twisted together around at least one core strand (2, 12, 22, 32, 42) formed by twisting together plural steel filaments, the method comprising:

a brass plating step of plating a steel wire material with brass;
a drawing step of drawing the resulting steel wire material;
a steel filament twisting step of twisting together the thus obtained steel filaments to form strands (3, 13, 23, 33, 43); and
a strand twisting step of twisting together the thus obtained strands (3, 13, 23, 33, 43) around at least one core strand (2, 12, 22, 32, 42),
**characterized in that** the method comprises a zinc plating step of performing zinc plating after said steel filament twisting step and before or after the strand twisting step, and
wherein a gauge of the brass plating is smaller than that of the zinc plating.

7. The method of producing a rubber article-reinforcing steel cord (1, 11, 21, 31, 41) according to claim 6, wherein the zinc plating step is performed by electroplating.

**Patentansprüche**

1. Gummiartikel-Verstärkungsstahlseil (1, 11, 21, 31, 41), in dem mehrere Mantellitzen (3, 13, 23, 33, 43), die jeweils durch Verdrillen mehrerer Stahlfäden miteinander geformt werden, um mindestens eine Kernlitze (2, 12, 22, 32, 42), die durch Verdrillen mehrerer Stahlfäden miteinander geformt ist, miteinander verdrillt werden,

wobei die Stahlfäden vermessingt sind, **dadurch gekennzeichnet, dass**
entweder die jeweiligen Mantellitzen (3, 13, 23, 33, 43) auf mindestens dem Außenumfang der Vermessingung von Stahlfäden der äußersten Schicht der Mantellitzen (3, 13, 23, 33, 43) verzinkt sind,
oder das Stahlseil (1, 11, 21, 31, 41) auf mindestens dem Außenumfang der Vermessingung von Stahlfäden der äußersten Schicht der Mantellitzen (3, 13, 23, 33, 43) verzinkt ist, und
eine Dicke der Vermessingung kleiner ist als diejenige der Verzinkung.

2. Gummiartikel-Verstärkungsstahlseil (1, 11, 21, 31, 41) nach Anspruch 1, wobei das Seil die Verzinkung auf dem Außenumfang der Vermessingung aller Stahlfäden der äußersten Schicht der Kernlitze (2, 12, 22, 32, 42) und der Mantellitzen (3, 13, 23, 33, 43) umfasst.

3. Gummiartikel-Verstärkungsstahlseil (1, 11, 21, 31, 41) nach Anspruch 1 oder 2, wobei, wenn ein Durchmesser der Stahlfäden als d definiert ist, eine Menge (g/m$^2$) der Vermessingung, die an die Stahlfäden angehaftet ist, 6d bis 10d beträgt, und eine Menge (g/m$^2$) der Verzinkung, die an die Stahlfäden angehaftet ist, 25d bis 95d beträgt.

4. Gummiartikel-Verstärkungsstahlseil (1, 11, 21, 31, 41) nach einem der Ansprüche 1 bis 3, wobei die Stahlfäden eine Zugfestigkeit Ts (MPa) aufweisen, die eine Beziehung erfüllt, die durch die folgende Formel dargestellt wird:

$$(-2\,000 \times d + 3\,825) \leq Ts < (-2\,000 \times d + 4\,525).$$

5. Gummiartikel-Verstärkungsstahlseil (1, 11, 21, 31, 41) nach einem der Ansprüche 1 bis 4, das für ein Förderband ist.

6. Verfahren zum Herstellen eines Gummiartikel-Verstärkungsstahlseils (1, 11, 21, 31, 41), in dem mehrere Mantellitzen (3, 13, 23, 33, 43), die jeweils durch Verdrillen mehrerer Stahlfäden miteinander geformt werden, um mindestens eine Kernlitze (2, 12, 22, 32, 42), die durch Verdrillen mehrerer Stahlfäden miteinander geformt wird, miteinander verdrillt werden, wobei das Verfahren Folgendes umfasst:

einen Vermessingungsschritt des Vermessingens eines Stahldrahtmaterials;
einen Ziehschritt des Ziehens des sich ergebenden Stahldrahtmaterials;
einen Stahlfaden-Verdrillungsschritt des Verdrillens der so erhaltenen Stahlfäden miteinander, um Litzen (3, 13, 23, 33, 43) zu formen; und
einen Litzen-Verdrillungsschritt des Verdrillens der so erhaltenen Litzen (3, 13, 23, 33, 43) miteinander um mindestens eine Kernlitze (2, 12, 22, 32, 42),
**dadurch gekennzeichnet, dass** das Verfahren einen Verzinkungsschritt des Durchführens einer Verzinkung nach dem Stahlfaden-Verdrillungsschritt und vor oder nach dem Litzen-Verdrillungsschritt umfasst, und
wobei eine Dicke der Vermessingung kleiner ist als diejenige der Verzinkung.

7. Verfahren zum Herstellen eines Gummiartikel-Verstärkungsstahlseils (1, 11, 21, 31, 41) nach Anspruch 6, wobei der Verzinkungsschritt durch Elektroplattieren durchgeführt wird.

**Revendications**

1. Câblé en acier de renfort d'article en caoutchouc (1, 11, 21, 31, 41) dans lequel plusieurs torons de gaine (3, 13, 23, 33, 43), formés chacun en torsadant ensemble plusieurs filaments d'acier, sont torsadés ensemble autour d'au moins un toron d'âme (2, 12, 22, 32, 42) formé en torsadant ensemble plusieurs filaments d'acier,

dans lequel les filaments d'acier sont plaqués avec du laiton, **caractérisé en ce que**
soit les torons de gaine respectifs (3, 13, 23, 33, 43) sont plaqués avec du zinc sur au moins la circonférence extérieure du placage de laiton de filaments d'acier de la couche la plus extérieure des torons de gaine (3, 13, 23, 33, 43),
soit le câblé en acier (1, 11, 21, 31, 41) est plaqué avec du zinc sur au moins la circonférence extérieure du placage de laiton de filaments d'acier de la couche la plus extérieure des torons de gaine (3, 13, 23, 33, 43), et une épaisseur du placage de laiton est inférieure à celle du placage de zinc.

2. Câblé en acier de renfort d'article en caoutchouc (1, 11, 21, 31, 41) selon la revendication 1, dans lequel le câblé comprend le placage de zinc sur la circonférence extérieure du placage de laiton de tous les filaments d'acier de la couche la plus extérieure du toron d'âme (2, 12, 22, 32, 42) et des torons de gaine (3, 13, 23, 33, 43).

3. Câblé en acier de renfort d'article en caoutchouc (1, 11, 21, 31, 41) selon la revendication 1 ou 2, dans lequel, si on désigne par d un diamètre des filaments d'acier, une quantité (g/m$^2$) du placage de laiton adhérant aux filaments d'acier est de 6d à 10d, et une quantité (g/m$^2$) du placage de zinc adhérant aux filaments d'acier est de 25d à 95d.

4. Câblé en acier de renfort d'article en caoutchouc (1, 11, 21, 31, 41) selon l'une quelconque des revendications 1 à 3, dans lequel les filaments d'acier ont une résistance en traction Ts (MPa) satisfaisant une relation représentée par la formule suivante :

$$(-2\,000 \times d + 3\,825) \leq Ts < (-2\,000 \times d + 4\,525).$$

5. Câblé en acier de renfort d'article en caoutchouc (1, 11, 21, 31, 41) selon l'une quelconque des revendications 1 à 4, qui est destiné à un convoyeur.

6. Procédé de production d'un câblé en acier de renfort d'article en caoutchouc (1, 11, 21, 31, 41) dans lequel plusieurs torons de gaine (3, 13, 23, 33, 43), formés chacun en torsadant ensemble plusieurs filaments d'acier, sont torsadés ensemble autour d'au moins un toron d'âme (2, 12, 22, 32, 42) formé en torsadant ensemble plusieurs filaments d'acier, le procédé comprenant :

 une étape de placage de laiton consistant à plaquer un matériau de câble en acier avec du laiton ;
 une étape d'étirage consistant à étirer le matériau de câble d'acier résultant ;
 une étape de torsadage de filaments d'acier consistant à torsader ensemble les filaments d'acier ainsi obtenus pour former des torons (3, 13, 23, 33, 43) ; et
 une étape de torsadage de torons consistant à torsader ensemble les torons ainsi obtenus (3, 13, 23, 33, 43) autour d'au moins un toron d'âme (2, 12, 22, 32, 42),
 **caractérisé en ce que** le procédé comprend une étape de placage de zinc consistant à réaliser un placage de zinc après ladite étape de torsadage de filaments d'acier et avant ou après l'étape de torsadage de torons, et dans lequel une épaisseur du placage de laiton est inférieure à celle du placage de zinc.

7. Procédé de production d'un câblé en acier de renfort d'article en caoutchouc (1, 11, 21, 31, 41) selon la revendication 6, dans lequel l'étape de placage de zinc est réalisée par électrodéposition.

FIG. 1

FIG. 2

FIG. 3

FIG. 4

FIG. 5

**EP 3 647 488 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5686639 A
- JP 2011202291 A
- JP 2015196937 A
- JP 2003311544 A